(19) Europäisches Patentamt / European Patent Office / Office européen des brevets

(11) **EP 3 807 985 B1**

(12) **FASCICULE DE BREVET EUROPEEN**

(45) Date de publication et mention
de la délivrance du brevet:
**07.06.2023 Bulletin 2023/23**

(21) Numéro de dépôt: **19729041.4**

(22) Date de dépôt: **11.06.2019**

(51) Classification Internationale des Brevets (IPC):
**H02M 1/42** *(2007.01)*    **H02M 7/217** *(2006.01)*
**H02M 1/36** *(2007.01)*

(52) Classification Coopérative des Brevets (CPC):
**H02M 1/4208; H02M 1/36; H02M 1/4216;
H02M 1/4241; H02M 7/2173;** Y02B 70/10

(86) Numéro de dépôt international:
**PCT/EP2019/065250**

(87) Numéro de publication internationale:
**WO 2019/238707 (19.12.2019 Gazette 2019/51)**

(54) **CONVERTISSEUR AC-DC**

WECHSELSTROM-GLEICHSTROM-WANDLER

AC-DC CONVERTER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.06.2018 FR 1800611**

(43) Date de publication de la demande:
**21.04.2021 Bulletin 2021/16**

(73) Titulaire: **THALES**
**92400 Courbevoie (FR)**

(72) Inventeur: **THOMAS, Phlippe, Claude**
**29217 PLOUGONVELIN (FR)**

(74) Mandataire: **Atout PI Laplace
Immeuble "Visium"
22, avenue Aristide Briand
94117 Arcueil Cedex (FR)**

(56) Documents cités:
**CN-A- 101 860 192    US-A1- 2010 259 240**

- **CHONGMING QIAO ET AL: "Three-phase
unity-power-factor VIENNA rectifier with unified
constant-frequency integration control", POWER
ELECTRONICS CONGRESS, 2000. CIEP 2000. VII
IEEE INTERNATIONAL OCTOBER 15-19, 2000,
PISCATAWAY, NJ, USA,IEEE, 15 octobre 2000
(2000-10-15), pages 125-130, XP010527897, ISBN:
978-0-7803-6489-9**
- **CICERO MARCOS TAVARES CRUZ ET AL: "A
PASSIVE LOSSLESS SNUBBER FOR THE HIGH
POWER FACTOR UNIDIRECTIONAL
THREE-PHASE THREE-LEVEL RECTIFIER",
IECON'99. PROCEEDINGS OF THE 25TH.
ANNUAL CONFERENCE OF THE IEEE
INDUSTRIAL ELECTRONICS SOCIETY. SAN
JOSE, CA, NOV. 29 - DEC. 3, 1999; [ANNUAL
CONFERENCE OF THE IEEE INDUSTRIAL
ELECTRONICS SOCIETY], NEW YORK, NY :
IEEE, US, 29 novembre 1999 (1999-11-29), pages
909-914, XP000896178, ISBN: 978-0-7803-5736-5**

**Description**

Le domaine de l'invention est celui de l'électronique de puissance. Il concerne plus particulièrement la conversion d'énergie électronique à découpage.

L'invention se rapporte aux convertisseurs AC-DC, c'est à dire aux convertisseurs alternatifs-continus ou redresseurs, à découpage du type aptes à être utilisés en tant que correcteurs du facteur de puissance ou PFC en référence à l'expression anglo-saxonne « Power Factor Correction ». Ce type de convertisseurs permet de garantir un niveau d'harmoniques, une masse et un volume plus faibles que les autotransformateurs-redresseurs dits « ATRU » (en référence à l'expression anglo-saxonne « AutoTransformer Rectifier Unit ») ou que les transformateurs-redresseurs « TRU » (en référence à l'expression anglo-saxonne « Transformer Rectifier Unit »). Les convertisseurs à découpage utilisés comme PFC permettent de garantir un facteur de puissance élevé et un taux d'harmoniques très bas.

Les solutions actuellement mises en oeuvre sont le plus souvent constituées de deux étages de conversion, un étage PFC proprement dit, non isolé et élévateur, et un étage de conversion DC-DC abaisseur, le plus souvent isolé. Généralement, en triphasé, le système est composé de 3 chaînes de conversion monophasées isolées câblées en « triangle » ou en « étoile » sur le bus AC triphasé et interconnectées en parallèle sur le bus DC de sortie. Les systèmes de conversion naturellement triphasés (Pont complet de type Boost) n'offrent pas un niveau de rendement très élevé.

Un exemple de convertisseur AC-DC dépourvu de pont de diodes en entrée et pouvant être utilisé en PFC est divulgué dans la demande de brevet US 20100259240. Ce convertisseur est destiné aux applications monophasées.

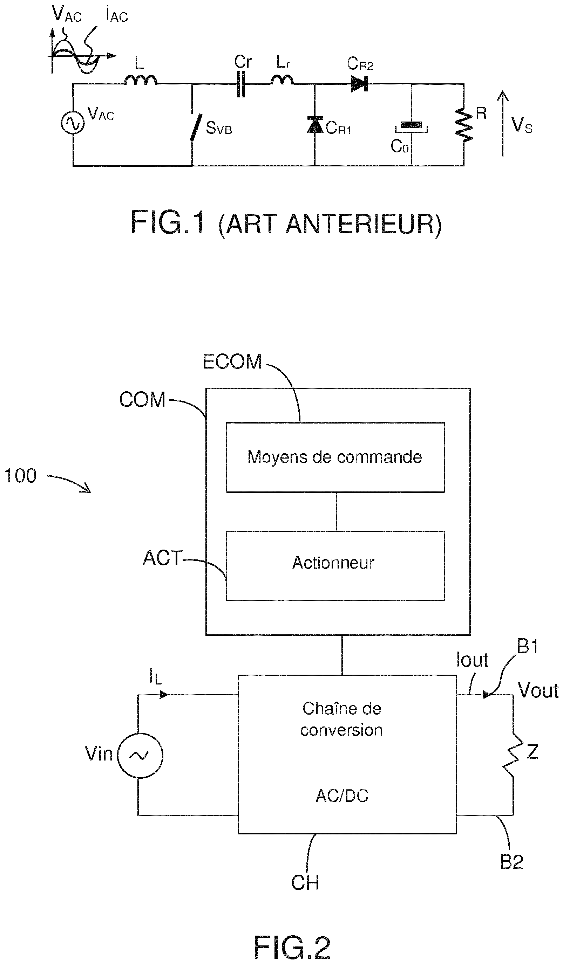

Comme visible sur la figure 1, ce convertisseur comprend, pour une tension d'entrée $V_{AC}$ appliquée entre une borne d'entrée et une borne commune :

- une inductance d'entrée L1 comprenant une première borne reliée à la borne d'entrée et une deuxième borne reliée à un interrupteur d'entrée commandable, bidirectionnel en tension $S_{VB}$, également relié à la borne commune,
- une branche connectée à la deuxième borne de l'inductance d'entrée L1 et comprenant, en série, un condensateur d'entrée Cr et une inductance de résonance $L_r$ dont la valeur est très inférieure à celle de l'inductance d'entrée L1,
- une première diode de sortie $C_{R1}$ comprenant une anode reliée à la borne commune et une cathode connectée à l'inductance de résonance Lr,
- une deuxième diode de sortie $C_{R2}$ comprenant une cathode connectée à une borne de sortie du convertisseur et une anode connectée l'inductance de résonance Lr.

Le convertisseur est apte à délivrer une tension continue $V_S$ entre la borne commune et la borne de sortie du convertisseur connectées à un condensateur de sortie $C_O$. La tension $V_S$ de sortie alimente une charge R. Cette tension $V_S$ est réglée en jouant sur le rapport cyclique de la commande de l'interrupteur d'entrée $S_{VB}$.

Ce convertisseur dépourvu de pont de diodes en entrée, permet de délivrer en sortie, une tension de même signe, aussi bien pour une tension d'entrée positive que pour une tension d'entrée négative.

Un problème de cette topologie réside dans le volume du condensateur de sortie.

Un but de l'invention est de proposer une topologie permettant de limiter le problème précité.

On connaît le document CN 101 860 192 A qui concerne un circuit PFC à trois niveaux et à trois états, qui comprend une inductance, un commutateur combiné à trois états, un premier condensateur et un deuxième condensateur.

Chongming Qiao et al « Three-phase unity-power-factor Vienna rectifier with unified constant-frequency intégration control » Power Electronics Congress, 15 octobre 200 divulgue un convertisseur triphasé comprenant deux condensateurs.

A cet effet, l'invention a pour objet un convertisseur AC-DC tel que divulgué dans la revendication 1.

Avantageusement, le convertisseur selon l'invention comprend au moins une des caractéristiques suivantes prise seule ou en combinaison :

- le convertisseur est destiné à transformer une tension polyphasée comprenant plusieurs phases en une tension continue, ledit convertisseur comprenant plusieurs chaînes de conversion identiques, chaque chaîne de conversion recevant une des phases sur sa borne d'entrée,
- la deuxième borne de l'interrupteur d'entrée n'est pas reliée au point neutre,
- le convertisseur comprend des moyens de commande configurés pour commander l'interrupteur d'entrée S de sorte que la chaîne de conversion fonctionne en abaisseur pendant une phase de démarrage du convertisseur,
- le convertisseur comprend des moyens de commandes configurés pour commander l'interrupteur d'entrée S de sorte que, pendant une phase de démarrage du convertisseur, la tension de sortie Vout est une fonction monotone croissante du temps et rejoint une tension de consigne en passant par une tension de sortie intermédiaire non nulle et inférieure à la tension de consigne puis pour commander le convertisseur, pendant une phase de régime établi, débutant lorsque la tension de sortie atteint la tension de consigne, de sorte à maintenir la tension de sortie sensiblement fixe à la tension de consigne pendant une durée non nulle,

- les moyens de commande sont configurés pour que la phase de démarrage du convertisseur comprenne une phase d'augmentation de la tension de sortie $V_{out}$ du convertisseur avec une dérivée continue d'une tension initiale à la tension de consigne,
- l'inductance d'entrée est reliée à la borne d'entrée par l'intermédiaire d'un filtre passe-bas,
- l'inductance de résonance présente un circuit magnétique de fréquence de coupure inférieure à 10 MHz,
- les condensateurs de sortie présentent une capacité au moins cent fois plus élevée que la capacité du condensateur de liaison et l'inductance d'entrée présente une valeur d'inductance au moins mille fois plus élevée que la valeur d'inductance de l'inductance de résonance.

L'invention se rapporte également à une procédé de commande d'un convertisseur AC-DC tel que divulgué dans la revendication 10.

Le procédé comprend avantageusement au moins une des caractéristiques suivantes prise seule ou en combinaison :

- la phase de démarrage comprend une phase d'augmentation de la tension de sortie Vout du convertisseur avec une dérivée continue d'une tension initiale à la tension de consigne,
- la chaîne de conversion fonctionne en élévateur lors d'une phase de régime établi ultérieure à la phase de démarrage.

D'autres caractéristiques et avantages de l'invention apparaîtront à la lecture de la description détaillée qui suit, faite à titre d'exemple non limitatif et en référence aux dessins annexés dans lesquels :

- la figure 1 déjà décrite représente un schéma électrique d'un convertisseur de l'art antérieur,
- la figure 2 représente schématiquement un réseau électrique comprenant un convertisseur AC monophasé - DC,
- la figure 3 représente schématiquement la chaîne de conversion du convertisseur de la figure 2,
- la figure 4 représente schématiquement un ensemble de conversion d'un convertisseur destiné à convertir une tension triphasée en une tension continue,
- les figures 5a et 5b représentent les allures des courants et tension dans la chaîne de conversion de la figure 3 en fonction du temps,
- la figure 6 représente un exemple des moyens de commande dans le cas d'un convertisseur destiné à convertir une tension polyphasée en une tension continue,
- la figure 7 représente un autre exemple des moyens de commande dans le cas d'un convertisseur destiné à convertir une tension polyphasée en une tension continue.

D'une figure à l'autre, les mêmes éléments sont repérés par les mêmes références.

L'invention se rapporte à un convertisseur AC-DC à découpage du type sans pont de diodes en entrée et pouvant être utilisé en tant que circuit de correction de facteur de puissance ou convertisseur PFC en référence à l'expression anglo-saxonne « Power factor corrector ». Comme représenté sur la figure 2, le convertisseur 100 comprend une chaîne de conversion AC-DC destinée à être reliée directement en entrée à une ligne délivrant une tension alternative $V_{in}$ et à délivrer une tension continue $V_{out}$ entre deux bornes de sortie B1 et B2 du convertisseur 100. Le courant $I_{out}$ délivré par le convertisseur 100 alimente une charge Z pouvant être purement résistive ou non.

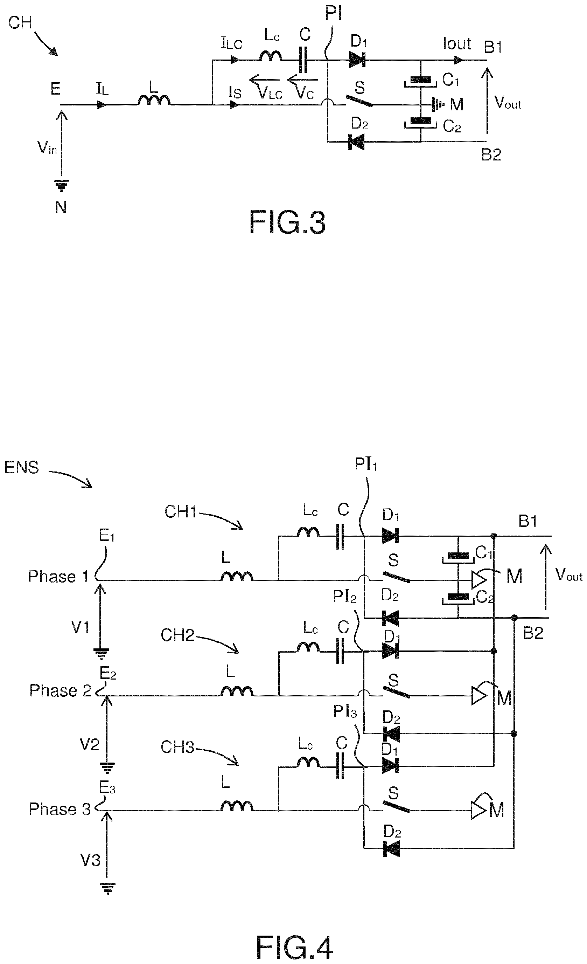

Sur la figure 3, on a représenté un exemple de chaîne de conversion CH destinée à convertir la tension alternative d'entrée $V_{in}$ appliquée entre une borne d'entrée E et un point neutre N en une tension continue $V_{out}$ délivrée entre la première borne de sortie B1 et la deuxième borne de sortie B2 du convertisseur. La chaîne de conversion CH comprend :

- une inductance d'entrée L comprenant une première borne de l'inductance d'entrée reliée à la borne d'entrée E et une deuxième borne de l'inductance d'entrée,
- un interrupteur d'entrée S comprenant une première borne reliée à la deuxième borne de l'inductance d'entrée L, l'interrupteur d'entrée S étant un interrupteur commandable bidirectionnel en tension et en courant,
- un circuit LC comprenant une première borne reliée à la deuxième borne de l'inductance d'entrée L et une deuxième borne reliée à un point intermédiaire PI, le circuit LC comprenant entre sa première borne et sa deuxième borne, une inductance de résonance $L_C$ de valeur inférieure à celle de l'inductance d'entrée L, et un condensateur C, dit condensateur de liaison, relié en série avec l'inductance de résonance $L_C$,

- un premier interrupteur de sortie $D_1$, comprenant une première borne reliée à la première borne de sortie B1 et une deuxième borne reliée au point intermédiaire PI, configuré pour laisser passer le courant uniquement du point intermédiaire PI vers la première borne de sortie B1, le premier interrupteur de sortie $D_1$ est, dans l'exemple de la figure 3, une diode comprenant une cathode reliée à la première borne de sortie B1 et une anode reliée au point intermédiaire PI,

- un deuxième interrupteur de sortie $D_2$ comprenant une première borne reliée à la deuxième borne de sortie B2 et une deuxième borne reliée au point intermédiaire PI, le deuxième interrupteur étant configuré pour laisser passer le courant uniquement de la deuxième borne B2 vers le point intermédiaire, le deuxième interrupteur de sortie $D_2$ est, dans l'exemple de la figure 3, une diode comprenant une anode reliée à la deuxième borne de sortie B2 et une cathode reliée au point intermédiaire PI.

Selon l'invention, le convertisseur 100 comprend en outre :

- un premier condensateur de sortie $C_1$ comprenant une borne reliée à la première borne de sortie B1 et une autre borne reliée à une deuxième borne de l'interrupteur d'entrée S,
- un deuxième condensateur de sortie $C_2$ de même capacité c2 que le premier condensateur de sortie $C_1$ (de capacité c1) et de capacité c2 supérieure à la capacité c du condensateur de liaison C, le deuxième condensateur de sortie $C_2$ comprenant une borne reliée à la deuxième borne de sortie B2 et une autre borne reliée à la deuxième borne de l'interrupteur d'entrée S.

Les condensateurs de sortie $C_1$, $C_2$ peuvent être polarisés, c'est-à-dire comprendre chacun une borne positive et une borne négative, mais ce n'est pas obligatoire. Dans le cas de la figure 3 où les condensateurs sont polarisés, la borne positive du premier condensateur de sortie $C_1$ est relié à la première borne de sortie B1 et sa borne négative est reliée à la borne positive du deuxième condensateur de sortie $C_2$ et à la deuxième borne de l'interrupteur d'entrée S, la borne positive du deuxième condensateur de sortie $C_2$ est reliée à la deuxième borne de sortie B2.
Les condensateurs de sortie présentent une capacité au moins cent fois plus élevée que la capacité du condensateur de liaison et de préférence au moins mille fois plus élevée. ($c1 >\_ 1000 * c$ et $c2 = c1$).
De même l'inductance d'entrée L présente une valeur d'inductance l au moins mille fois plus élevée que la valeur le de l'inductance Lc. Autrement dit, $l \geq 1000 * lc$.
L'interrupteur d'entrée S est un interrupteur commandable bidirectionnel en tension et en courant. Autrement dit, cet interrupteur d'entrée S est apte, dans un état ouvert, à bloquer un courant quelle que soit la polarité de la tension à ses bornes et, dans un état fermé, à conduire le courant dans les deux directions de sa première borne à sa deuxième borne et de sa deuxième borne à sa première borne. Un tel interrupteur comprend, par exemple, deux transistors montés en série avec une source commune. Ces transistors peuvent être des transistors bipolaires à grille isolée ou IGBT, de l'anglais Insulated Gate Bipolar transistor ou des transistors à effet de champ ou FET en référence à l'expression anglo-saxonne « field effect transistor » comme par exemple des transistors à effet de champ à grille isolée de type N ou MOSFET (acronyme anglais de « Métal Oxide Semiconductor Field Effect Transistor ».
En variante à la réalisation de la figure 3, au moins un des interrupteurs de sortie $D_1$, $D_2$ est un interrupteur commandé de sorte à obtenir laisser passer le courant uniquement dans un sens.
Avantageusement, au moins un interrupteur de sortie comprend un interrupteur commandé relié à B1 ou B2 et à PI. Cet interrupteur commandé est commandé de sorte à laisser passer le courant uniquement dans le sens souhaité. A cet effet, l'interrupteur comprend des moyens de commande configurés pour commander l'interrupteur de sortie de sorte que de dernier laisse passer le courant uniquement dans le sens souhaité. Cette solution est plus complexe que l'utilisation de diodes mais a un intérêt dans le domaine des puissances élevées. L'interrupteur peut par exemple comprendre un thyristor ou un transistor à effet de champ à grille isolée plus couramment nommé MOSFET (acronyme anglais de l'expression « Métal Oxide Semiconductor Field Effect Transistor » ) à redressement synchrone.
Le convertisseur 100 comprend également, comme représenté sur la figure 2, des moyens de commande COM aptes à commander l'interrupteur d'entrée S visible sur la figure 3. Ces moyens de commande COM comprennent des moyens d'établissement de commande ECOM pour générer une commande de rapport cyclique d et des moyens d'actionnement ACT comprenant au moins un actionneur pour actionner l'interrupteur d'entrée S. Autrement dit, l'actionneur est actionné par les moyens d'établissement de commande ECOM de sorte à actionner l'interrupteur d'entrée S pour qu'à chaque période de découpage T, l'interrupteur d'entrée S soit fermé de l'instant 0 à l'instant d*T et ouvert de l'instant d*T à l'instant T. L'interrupteur d'entrée S est alors ouvert, à chaque période de découpage, pendant une durée d'*T, où d' = 1-d.
L'état ouvert ou fermé de l'interrupteur d'entrée S a un effet sur le blocage ou la conduction du courant à travers chacun des deux interrupteurs de sortie, $D_1$ et $D_2$, de la chaîne de conversion. $D_1$, $D_2$ sont configurés et disposés (dans le cas des diodes) ou aptes à être commandés pour bloquer ou conduire le courant en fonction de la polarité de la tension en entrée de la chaîne de conversion de sorte qu'un courant continu de même polarité est obtenu en sortie de la chaîne de conversion quelle que soit la polarité de la tension en entrée de la chaîne de conversion.
Le rapport entre la tension d'entrée maximale (crête de la tension en AC) et la tension de sortie $V_{out}$ dépend du rapport cyclique de l'interrupteur d'entrée S.

L'inductance résonante $L_C$ et le condensateur de liaison C forment un circuit résonant LC lorsque l'interrupteur d'entrée S est fermé, quelle que soit la polarité du courant d'entrée. Ce circuit résonant est actif seulement pendant une demi-période de résonance, à la fermeture de l'interrupteur S. La période de résonance Tr du circuit LC est donnée par la formule suivante:

$$Tr = 2 * \pi * \sqrt{Lc * C}$$

La topologie de la figure 3 permet de délivrer en sortie une tension de même signe, et réglable quel que soit le signe de la tension d'entrée $V_{in}$.

Du fait de l'agencement des condensateurs de sortie selon l'invention, les chaînes de conversion, lorsqu'elles sont commandées pour être élévatrices, sont faiblement élévatrices. Elles sont deux fois moins élévatrices que des topologies en pont de Vienna du type de celle décrite dans l'article « 3-Phase Power Factor Correction, Using Vienna Rectifier Approach and Modular Construction for Improved Overall Performance, Efficiency and Reliability », Mr.Abhijit D. Pathak, et Al. En effet, comme nous le verrons par la suite, $V_{out} = V_{inc} / (1-d)$ où $V_{inc}$ est la valeur crête de la tension alternative d'entrée $V_{in}$. Le condensateur de liaison C du circuit LC se charge à $\pm V_{out}/2$ (suivant le signe de $V_{in}$). Cette solution peu élévatrice peut permettre de s'affranchir d'un étage abaisseur de tension selon la tension de sortie souhaitée.

La présence d'un seul interrupteur d'entrée bidirectionnel en tension et en courant, l'absence de pont de redressement d'entrée (pont complet de diodes en entrée) et la simplicité de la topologie permettent d'atteindre un haut niveau d'intégration et un rendement de conversion élevé.

Lorsque le convertisseur est utilisé en PFC, l'interrupteur d'entrée est commandé de sorte que le courant prélevé $I_L$ en entrée est proportionnel et en phase avec la tension d'entrée $V_{in}$. Cela permet d'obtenir un faible niveau d'harmoniques et donc un facteur de puissance élevé.

Dans un système polyphasé, comme les capacités des condensateurs de sortie $C_1$ et $C_2$ sont identiques ou sensiblement identiques, le point M, c'est-à-dire le point de liaison entre les deux condensateurs de sortie $C_1$ et $C_2$ ou point milieu, est un neutre fictif de même potentiel que le point neutre N du réseau d'entrée.

L'invention trouve alors une utilité particulière pour les véhicules (avions gros porteurs, avions d'armes, bâtiments de surface, sous-marins, drones de surface ou sous-marin etc.), dont le neutre de la génération de bord (ou réseau de bord) n'est pas distribué ou dans lesquels il n'est pas possible de prélever du courant sur le neutre. Un autre avantage concerne la sécurité. En effet, un défaut entre une phase et le neutre se traduit par une surintensité qu'il est facile de détecter pour protéger le réseau. La topologie proposée permet d'éviter un raccordement à la masse mécanique. Un avantage de cette configuration est d'éviter la circulation de certains harmoniques sur le réseau. Par exemple, dans le cas d'un réseau triphasé, l'harmonique 3 transite facilement sur le neutre avion. Un autre avantage de cette configuration est d'éviter le déclenchement de protections en cas de défaut simple entre une phase et la carcasse permettant ainsi une continuité de service même en cas de défaut.

Le point M et le point neutre peuvent être reliés ou non selon les avantages souhaités.

Un autre but est de proposer un convertisseur AC/DC destiné à recevoir en entrée une tension polyphasée, permettant son utilisation dans les applications de puissance plus élevée.

On propose donc une variante dans laquelle le convertisseur est destiné à convertir une tension polyphasée véhiculée par une ligne polyphasée en une tension continue délivrée entre les deux bornes de sortie du convertisseur. Le convertisseur comprend alors un ensemble de conversion comprenant plusieurs chaînes de conversion transformant chacune une tension alternative, correspondant à une des phases de la ligne polyphasée, appliquée entre les deux bornes d'entrée de cette chaîne de conversion, en une tension continue délivrée entre les deux bornes de sortie B1 et B2 du convertisseur.

Un tel ensemble de conversion ENS est représenté sur la figure 4. Cet ensemble de conversion ENS comprend plusieurs chaînes de conversion identiques CH1, CH2, CH3. Chacune de ces chaînes est identique à la chaîne de conversion de la figure 3. Ces chaînes sont reliées aux condensateurs $C_1$ et $C_2$ de sortie de l'ensemble de conversion ENS, c'est à dire du convertisseur, de la même façon que la chaîne CH. Les différentes chaînes de conversion sont reliées à des phases différentes de la ligne polyphasée (phases 1, 2 et 3 sur la figure 4) et soumises à leurs bornes d'entrée respectives $E_1$, $E_2$, $E_3$ à des tensions respectives V1, V2, V3 correspondant aux tensions des phases respectives de la ligne polyphasé. Le nombre de chaînes de conversion est égal au nombre de phases du réseau de la tension d'entrée. La figure 4 illustre un exemple non limitatif de convertisseur de puissance comprenant trois chaînes de conversion destiné à être relié à un réseau d'entrée triphasé mais le nombre de phases de la ligne polyphasée d'entrée et donc le nombre de chaînes de conversion pourrait être différent. Chacune de ces chaînes comprend un point intermédiaire PI1, PI2, PI3 de la chaîne.

Comme les phases sont équilibrées (le réseau délivrant des phases de même amplitude et de même fréquence mais déphasées) et comme les chaînes de conversion sont toutes identiques, le courant absorbé sur les différentes phases est le même (au déphasage près entre les phases). Le point M, est donc un neutre fictif de même potentiel que le neutre N du réseau d'entrée, même si ce dernier n'est pas distribué, c'est-à-dire même si ces points M et N ne sont pas reliés l'un à l'autre.

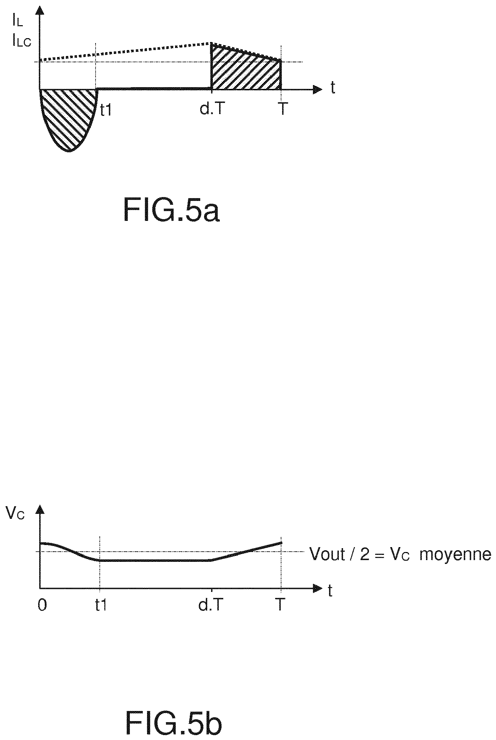

Nous allons maintenant décrire le fonctionnement des chaînes de conversion CH en référence à la figure 3 et aux figures 5a et 5b.

La valeur de l'inductance d'entrée L est très supérieure à celle de l'inductance résonante $L_c$ et la capacité du condensateur d'entrée est faible par rapport à la capacité de chacun des condensateurs $C_1$ et $C_2$, les condensateurs $C_1$ et $C_2$ présentant une capacité identique.

La période de découpage T est très inférieure à la période de la tension alternative d'entrée $V_{in}$.

L'analyse consiste à découper la période de découpage en trois phases de fonctionnement. L'interrupteur d'entrée S, les composants inductifs et capacitifs sont considérés ici comme parfaits.

Le fonctionnement est décrit pendant une alternance positive de la tension d'entrée. Pendant une alternance négative, les courants s'inversent et les rôles des diodes $D_1$ et $D_2$ sont également échangés ($D_1$ sert à inverser la charge de C et $D_2$ conduit pendant une durée de (1-d)*T ).

On se place dans une phase dite de régime établi lors de laquelle l'interrupteur S est commandé de sorte que $V_{out}$ est fixe (tension de sortie en régime établi) et on considère une période de découpage pendant laquelle la tension d'entrée $V_{in}$ peut être considérée constante (car l'évolution de la tension $V_{in}$ est lente par rapport à une période de découpage).

Le fonctionnement est le même pour chacune des chaînes de la figure 4.

Phase 1

L'instant initial t = 0 correspond au début de la période T de découpage.

L'interrupteur d'entrée S est fermé de 0 à t1 ce qui bloque la diode $D_2$. Comme visible sur la figure 5b, la tension $V_C$ aux bornes de C diminue par résonance entre $L_c$ et C jusqu'à annulation du courant dans la diode $D_2$ qui se bloque naturellement alors que S reste fermé.

Le courant $I_S$ est le courant circulant dans l'interrupteur d'entrée S vers le point milieu M. Le courant $I_{LC}$ est le courant absorbé par le circuit LC. Le courant $I_L$ est le courant absorbé par la chaîne de conversion :

A tout instant $I_S(t) = -I_{LC}(t) + I_L(t)$

$$I_L(t) = \frac{V_{in} * t}{L} + I_L(t=0)$$

$I_L(t)$ croit comme représenté sur la figure 5a en traits pointillés.

$$V_{Lc}(t) = \frac{V_{out}}{2} + \left(V_C(t=0) - \frac{V_{out}}{2}\right) * \cos(\omega * t)$$

avec $$\omega = \frac{1}{\sqrt{L_c * C}}$$

D2 se bloque à l'instant t1 :

$$t1 = \pi * \sqrt{L_c * C}$$

$$I_{LC}(t) = \frac{\left(V_C(t=0) - \frac{V_{out}}{2}\right)}{\sqrt{(L_c * C}} * \sin(\omega * t)$$

ce qui n'est valable que si $V_C(t=0)$ est supérieur à $\frac{V_{out}}{2}$ . Ainsi la valeur absolue de $I_{LC}(t)$ augmente jusqu'au blocage de la diode puis diminue jusqu'à t1 comme visible sur la figure 5a en traits pleins.

Phase 2

L'interrupteur d'entrée S est toujours fermé mais $D_2$ est bloquée de t1 à d*T avec T la période de découpage (T = 1/F où F est la fréquence de découpage).

Comme visible sur la figure 5a :

A t1, $I_{LC}$=0 comme visible sur la figure 3, $I_{out}$ = 0 et $I_S$ (t) = $I_L$ (t)

$I_L$ (t) = $V_{in}$ * t / L + $I_L$(t=t1) la charge de l'inductance L est linéaire comme visible sur la figure 5a.

Phase 3

L'interrupteur S est ouvert à l'instant t2 = d*T et le reste jusqu'à la fin de la période de découpage T.

Lors de cette troisième phase, une partie de l'énergie stockée dans L est restituée à C et à C1. Cette durée (T-d*T) est très courte par rapport à la période de la fréquence de résonance du circuit LC. On se retrouve à travailler autour de ω*t = π/2 avec $$\omega = 1 \Big/ \sqrt{(L_c + L) * C}.$$ L'allure du courant $I_L$ est quasi-linéaire comme visible sur la figure 5a.

Pendant la troisième phase, on peut donc écrire :

$$I_L\ (t) = I_{LC\ (t),}$$

$$I_L\ (t) = (V_{in} - V_{out}/2) \Big/ \sqrt{(L_c + L) * C} * \sin(\omega * t) + I_L(t = d * T)$$

La décharge en courant de l'inductance d'entrée L est quasi-linéaire et le courant $I_L$(t) dans L décroit, alors que C se charge en tension et $V_C$ (t) augmente de façon quasi-linéaire comme visible sur la figure 5b.

On note que pour que la charge moyenne du condensateur de liaison C, c'est-à-dire $V_c$ moyenne, soit constante, il faut qu'il y ait égalité entre l'énergie déstockée pendant la phase 1 et celle déstockée pendant la phase 3 ; ceci correspond à une égalité entre les aires positive et négative du courant $I_{LC}$ représentées en hachuré sur la figure 5a.

On constate qu'à chaque période de découpage T, on transfère la même énergie aux deux condensateurs de sortie $C_1$ et $C_2$ de même capacité, vers $C_2$ de t=0 à t1 et vers $C_1$ de t=d*T à T. Ainsi les condensateurs se chargent à la fréquence de découpage et non à la fréquence du réseau très inférieure à la fréquence de découpage. Cette configuration permet de limiter le stockage de l'énergie et donc la taille des condensateurs ce qui permet d'atteindre un haut niveau d'intégration et/ou de délivrer une tension de sortie stable, en limitant les ondulations de la tension de sortie (la tension moyenne est la même aux bornes des deux condensateurs pendant une période de découpage). Il est à noter que dans le cas d'un montage du type pont de Vienna comme dans l'article « 3-Phase Power Factor Correction, Using Vienna Rectifier Approach and Modular Construction for Improved Overall Performance, Efficiency and Reliability », Mr.Abhijit D. Pathak, et Al, un des condensateurs de sortie est chargé sur l'alternance positive du réseau et l'autre condensateur de sortie est chargé sur l'alternance négative du réseau. Dans le montage selon l'invention, la charge de C1 et C2 est donc réalisée à la fréquence de découpage au lieu de la fréquence du réseau.

Détermination de la tension de sortie $V_{out}$ :

L'amplitude de la variation de courant $I_L$ est la même entre 0 et d*T qu'entre d*T et T dans un régime pendant lequel le courant $I_L$ en début de période est identique à celui de fin de période.

De t=0 à d*T : $\Delta I_L$ = $V_{in}$*d*T / L

De t=d*T à T : $\Delta I_L$ = ($V_{out}$/2 + $V_c$ - $V_{in}$ )*(1 - d)*T / L = ($V_{out}$-$V_{in}$)*(1 - d)*T / L avec $V_c$ = $V_{out}$/2

On en déduit : ($V_{out}$ - $V_{in}$)*(1 - d) = $V_{in}$*d c'est-à-dire :

$$V_{out} = V_{in} / (1 - d)$$

C'est l'équation d'un convertisseur élévateur (ou « Boost » en terminologie Anglo-saxonne).

Cette condition est vérifiée si le produit d*T est supérieur ou égal à Tr/2 (Tr étant la période de résonance du circuit LC formé par $L_c$ et C ), sinon la décharge du condensateur C n'est pas possible pendant la période de découpage, c'est-à-dire entre 0 et d*T, et le fonctionnement en élévateur décrit ci-avant ne peut pas s'installer.

Lorsque d*T est inférieur à Tr/2, alors la décharge du condensateur C n'est pas possible entre 0 et d*T. Le convertisseur fonctionne alors en abaisseur.

Ainsi, le fonctionnement élévateur est obtenu lorsque les moyens d'établissement de commande ECOM commandent l'interrupteur d'entrée S de sorte que le rapport cyclique d soit supérieur ou égal à Tr/2. Les moyens d'établissement de commande ECOM peuvent être en outre configurés pour que $V_{out}$ soit égale à une valeur de consigne $V_{cons}$ prédéterminée.

En d'autres termes, il ne peut pas y avoir de mise en résonance de $L_C$ et C et donc fonctionnement en élévateur tant que la charge de C ($V_c$) n'a pas rallié la valeur de la tension $V_{out}/2$ (soit la charge de $C_2$).

En fonctionnement élévateur régulé, c'est-à-dire lorsque la tension de sortie est fixe, la tension Vc moyenne aux bornes de C est égale à $V_{out}/2$.

En courant alternatif monophasé ou polyphasé, la tension $V_{in}$ utilisée dans les équations données ci-avant est la valeur crête de la tension simple du réseau (entre phase et neutre). En fonctionnement élévateur, la tension de sortie $V_{out}$ est donc toujours supérieure à la valeur crête maximale de la tension simple entre phase et neutre $V_{in}$.

Commutations :

A la fermeture de l'interrupteur d'entrée S, les inductances L et Lc s'opposent à l'établissement du courant et on réalise une commutation par courant nul aussi appelée Zéro Current Switching ou ZCS en terminologie anglo-saxonne.

L'interrupteur d'entrée S n'est pas parfait, il présente une capacité parasite, l'ouverture de cet interrupteur charge alors sa capacité parasite. L'inductance Lc s'oppose à l'établissement du courant vers la diode $D_1$. Il s'en suit un régime oscillant ou bruit de commutation dû à la mise en résonance de la capacité parasite de l'interrupteur d'entrée S avec l'inductance Lc, ce qui peut entrainer des surtensions aux bornes de l'interrupteur d'entrée S. La fréquence des oscillations peut être très élevée (>10MHz).

Afin de limiter l'amplitude et la durée du bruit de commutation dû au blocage de l'interrupteur d'entrée, l'inductance Lc peut être configurée de façon que son circuit magnétique dissipe au moins partiellement l'énergie du bruit de commutation de sorte à limiter et de préférence supprimer les surtensions au blocage de l'interrupteur de sortie S. A cet effet, le circuit magnétique de l'inductance Lc présente une fréquence de coupure inférieure à 10 MHz. La fréquence du bruit de commutation est typiquement supérieure à 10 MHz.

L'inductance de résonance Le qui contribue au bruit de commutation, comprend par exemple un circuit magnétique à entrefer réparti. Ce type d'inductance est, par exemple, réalisé en un matériau à faible perméabilité magnétique, par exemple, inférieur à 100 nH/spire$^2$. La faible énergie du bruit de commutation, à une fréquence supérieure à quelques MHz, sera dissipée dans le matériau magnétique.

Utilisation en PFC

Au passage par zéro de la tension $V_c$, la charge de C doit s'inverser ce qui ne peut être fait instantanément et peut affecter l'allure du courant absorbé.

Les valeurs des composants Le et C sont avantageusement choisies pour assurer le retournement de la tension Vc sur le condensateur C dans un temps suffisamment court pour autoriser une plage de variation du rapport cyclique suffisamment importante pour tenir la dynamique de tension d'entrée et pour limiter le pic de courant $I_s$ qui circule dans l'interrupteur d'entrée. Cela permet de limiter un surdimensionnement conséquent de l'interrupteur d'entrée.

Démarrage

Au démarrage du convertisseur, c'est-à-dire lors de l'établissement de la tension d'entrée $V_{in}$ sur la borne d'entrée, lorsque l'interrupteur de sortie S n'est pas commandé, il apparait un appel de courant inhérent aux interrupteurs $D_1$ et $D_2$ (le convertisseur se comporte comme un redresseur). Cet appel de courant est traditionnellement limité en prévoyant un dispositif de pré-charge en aval ou en amont du convertisseur du type comprenant un interrupteur ou un contacteur venant court-circuiter, en régime établi, des résistances montées en série avec les phases ou un interrupteur (transistor) de puissance sur le bus continu, qui court-circuite, en régime établi, une résistance montée en série, en amont des condensateurs de sortie. Le dispositif de pré-charge permet la charge des condensateurs de sortie au démarrage du convertisseur. Or, ce type de dispositif de pré-charge est volumineux.

Un avantage du convertisseur selon l'invention est de permettre de régler la tension $V_{out}$ délivrée à une valeur prédéterminée comprise entre zéro et une valeur supérieure à la valeur crête de la tension simple, ce qui peut permettre de limiter l'appel de courant au démarrage en intégrant la montée de la tension de sortie sur un temps long de plusieurs périodes AC de $V_{in}$. Cela s'applique aussi bien dans le cas monophasé que polyphasé.

La limitation du courant d'appel au démarrage est réalisée par une commande judicieuse de l'interrupteur d'entrée.

En effet, en l'absence de découpage, les condensateurs C, $C_1$ et $C_2$ se chargent à des valeurs de tension inversement proportionnelles à leurs capacités. En conséquence, $V_c$ est quasiment égale à $V_{in}$ car C est de très faible valeur comparativement à $C_1$ et $C_2$. La tension de sortie $V_{out}$ reste alors minime (dans le rapport inverse des valeurs des capacités des condensateurs C et $C_1$ ou $C_2$) suivant l'alternance considérée.

Quand le convertisseur découpe, le condensateur de liaison C peut rester chargé à une tension moyenne supérieure à $V_{out}/2$, si le rapport cyclique d est réglé de façon à empêcher sa décharge complète durant le début de la période de découpage T, la tension de sortie $V_{out}$ est alors égale à $V_{in} - V_c$ et $V_{out}$ est d'autant plus faible que $V_c$ est importante.

Ceci n'est possible que si le rapport cyclique d est tel que d*T est d'une durée inférieure à la demi-période de résonance du circuit LC (couple C et Le),

$$\text{soit} * T < \pi * \sqrt{(L_c * C)}$$

. Un rapport cyclique d très faible permet de limiter considérablement la tension $V_{out}$ et de délivrer une tension $V_{out}$ quasiment nulle (plus précisément, dans le rapport inverse des valeurs des capacités de C1 et C comme vu précédemment). On peut donc limiter le courant d'appel sur le réseau AC sans utiliser de dispositif de pré-charge, en augmentant progressivement le rapport cyclique d*T. Notons DS le seuil de durée suivant

$$DS = \pi * \sqrt{(L_c * C)} = \frac{1}{2} * Tr$$

Où $Tr$ est la période de résonnance du circuit LC formé par $L_c$ et C

En résumé :

- Si d tend vers 0 (avec $d * T \ll DS$), alors la valeur moyenne de la tension $V_c$ aux bornes de C tend vers $V_{in}$, le rapport entre $V_c$ et $V_{c1}$ (tension aux bornes de $C_1$) est inversement proportionnel au rapport entre C et $C_1$ (pont diviseur capacitif), la valeur de C étant très inférieure à celle de $C_1$.
- Si d est tel que $0 < d * T < DS$, alors $V_{out}$ est inférieure à $V_{in}$.
- Si d est tel que $d * T > DS$, alors $V_{out}$ est supérieure à $V_{in}$.

Avantageusement, les moyens de commande COM sont configurés pour commander l'interrupteur d'entrée de sorte que le convertisseur fonctionne en abaisseur au démarrage du convertisseur.

Autrement dit, les moyens de commande COM sont configurés pour régler la valeur du rapport cyclique d de façon que $d * T < DS$, au démarrage du convertisseur, c'est-à-dire à la mise sous tension du convertisseur

Cette commande de l'interrupteur d'entrée permet de limiter la décharge du condensateur de liaison au démarrage ce qui limite la tension de sortie $V_{out}$ ($V_{out}$ est alors inférieure à Vc) et le courant d'appel. Le courant d'appel est limité à la valeur de l'appel de courant dû au condensateur de liaison C qui présente une capacité c de valeur très inférieure à la capacité c1 de C1.

Autrement dit, cela permet de limiter le courant d'appel sans ajouter de dispositif de pré-charge dans le cas où le convertisseur est destiné délivrer une tension de consigne fixe telle que le convertisseur fonctionne en élévateur après la phase de démarrage.

De façon plus générale, les moyens de commandes sont avantageusement configurés pour commander l'interrupteur d'entrée S, au démarrage du convertisseur, de sorte que la tension de sortie $V_{out}$ est une fonction monotone croissante du temps ou strictement monotone croissante du temps (autrement dit sa dérivée, à chaque instant, est supérieure ou égale à 0 ou supérieure à 0) et rejoint une tension de consigne en passant par une tension de sortie intermédiaire non nulle et inférieure à la tension de consigne, puis pour commander le convertisseur en régime établi, qui débute lorsque la tension de sortie atteint la tension de consigne, de sorte à maintenir la tension de sortie sensiblement fixe à la tension de consigne. Cela est réalisé pendant une durée non nulle. Cette durée est typiquement de plusieurs périodes de la tension d'entrée.

Avantageusement, la tension de sortie est maintenue sensiblement fixe à la tension de consigne pendant plusieurs périodes de la tension alternative d'entrée. Cette étape permet de limiter l'appel de courant au démarrage. La limitation du courant de démarrage est permise que le convertisseur soit destiné à fonctionner en élévateur ou en abaisseur en régime établi.

Par exemple, les moyens de commande sont configurés pour commander l'interrupteur d'entrée S de sorte que la phase de démarrage du convertisseur comprend une phase d'augmentation de la tension de sortie $V_{out}$ du convertisseur avec une dérivée continue d'une tension initiale à la tension de consigne. La phase de démarrage peut aussi comprendre une phase initiale, débutant au démarrage du convertisseur et précédant la phase d'augmentation de la tension de sortie, pendant laquelle la tension de sortie est maintenue à la tension initiale pendant plusieurs périodes de la tension alternative d'entrée. Ainsi, la phase de démarrage comprend une phase initiale débutant à t= 0 correspondant à l'instant du démarrage, c'est-à-dire de la mise sous tension du convertisseur, à t = ta, lors de laquelle la tension de sortie est maintenue sensiblement fixe à la tension initiale pendant une durée non nulle, de préférence pendant plusieurs périodes de la tension alternative d'entrée, et une phase d'augmentation de tension de sortie de t= ta à t= tb, lors de laquelle la tension de sortie augmente avec une dérivée continue jusqu'à la tension de consigne. Dans un exemple non limitatif, le convertisseur est commandé de façon que la tension de sortie est sensiblement une fonction linéaire du temps entre t=ta et t= tb pendant la phase de démarrage. En variante, la phase de démarrage comprend uniquement la phase d'augmentation de la tension. L'instant ta est alors nul.

La phase de régime établi débute à l'instant t=tb. Lors de cette phase la tension de sortie est maintenue sensiblement fixe à la tension de consigne.

La tension de sortie est avantageusement maintenue sensiblement fixe à la tension de consigne pendant plusieurs périodes de la tension alternative d'entrée.

Avantageusement, la tension de sortie initiale est sensiblement nulle. Sa valeur absolue est la valeur absolue minimale de la tension de sortie due à la charge des condensateurs de sortie.

En variante, la tension de sortie initiale comprend une valeur absolue comprise entre la valeur absolue minimale et la valeur absolue de la tension de consigne.

La tension de consigne est par exemple telle que le convertisseur fonctionne en élévateur. En variante, cette tension de consigne est telle que le convertisseur fonctionne en abaisseur.

L'invention se rapporte également à un procédé de commande de l'interrupteur ou des interrupteurs du convertisseur de sorte à mettre en oeuvre au moins une des étapes listées ci-dessus. Le procédé comprend avantageusement une phase de démarrage telle que décrite précédemment et une phase de régime établi telle que décrite précédemment débutant lorsque la tension de sortie atteint la tension de consigne.

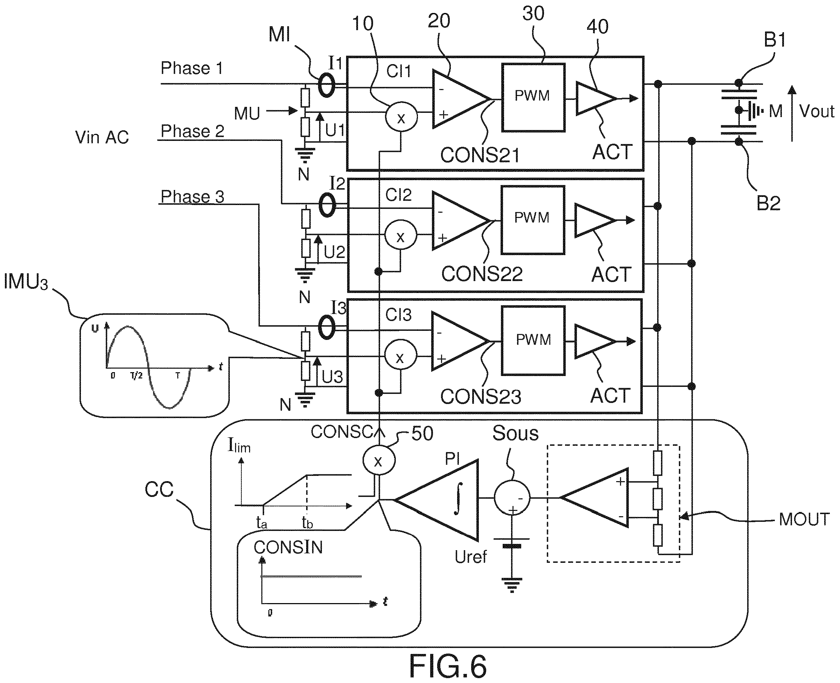

La figure 6 représente schématiquement un exemple non limitatif des moyens de commande dans le cas d'un convertisseur triphasé utilisé en PFC.

Les moyens de commande COM comprennent une chaîne de commande commune CC délivrant une consigne en courant commune CONSC établie à partir d'une mesure de la tension de sortie $V_{out}$ du convertisseur. Ils comprennent également une chaîne de commande individuelle pour chaque phase CI1, CI2, CI3. Les chaînes de commande individuelles des différentes phases sont identiques. Seuls les éléments de la chaîne de commande individuelle de la première phase CI1 sont référencés pour plus de clarté. Chaque chaîne de commande individuelle reçoit une mesure de la tension d'une des phases d'entrée phase 1, phase 2 ou phase 3 et du courant I1, I2 ou I3 prélevé sur cette phase. Des moyens de mesure de la tension de la phase correspondant MU et des moyens de mesure MI du courant prélevé sont prévus à cet effet. La chaîne de commande individuelle CI1, CI2, CI3 comprend un multiplieur 10, multipliant la première consigne en courant commune CONSC avec la mesure de la tension de la phase correspondante U1, U2 ou U3. Cette multiplication permet d'absorber, sur la phase d'entrée, un courant qui est en phase avec la tension de cette phase et proportionnel à cette tension et donc d'utiliser ce convertisseur en mode PFC (la charge vue par le réseau est assimilable à une résistance).

Toute autre loi de commande utilisée sur le pont de Vienna peut en variante être mise en oeuvre sur la topologie décrite ici.

Pour exemple, en mode courant, la mesure du courant I1, I2 ou I3 prélevé sur la phase (phase 1, phase 2 ou respectivement phase 3) et la sortie du multiplieur 10 sont fournies en entrée d'un comparateur 20 qui compare la mesure du courant I1, I2 ou I3 prélevé sur la phase correspondante et la sortie du multiplieur 10 pour délivrer une consigne en courant individuelle CONS21, CONS22, ou respectivement CONS23. Cette consigne individuelle est fournie à un modulateur de largeur d'impulsion PWM, 30, qui délivre des commandes de fermeture et d'ouverture de l'interrupteur d'entrée S de la chaîne de conversion correspondante CH1, CH2 ou respectivement CH3. Ces commandes sont fournies à un actionneur ACT, 40, qui actionne l'interrupteur d'entrée S de la chaîne correspondante CH1, CH2 ou respectivement CH3 en fonction de ces commandes.

La chaîne de commande commune CC comprend un proportionnel intégrateur PI numérique ou analogique dont la fréquence de coupure est inférieure à la fréquence du réseau afin que la consigne en courant initiale CONSIN délivrée par le proportionnel intégrateur PI varie peu durant une période du réseau.

Le proportionnel intégrateur PI délivre cette consigne en courant initiale CONSIN à partir d'une sortie d'un soustracteur SOUS soustrayant une mesure d'une tension de sortie $V_{out}$ du convertisseur, mesurée entre les bornes de sortie B1 et B2 du convertisseur par des moyens de mesure de cette tension de sortie MOUT, à une tension de référence Uref fixe correspondant à la tension de consigne.

Dans une variante moins avantageuse, le multiplieur 10 n'utilise pas la tension d'entrée (mode avantageux qui permet de faire en sorte que le convertisseur se comporte comme une résistance pure), mais le signal issu d'une boucle à verrouillage de phase ou PLL en référence à l'expression anglo-saxonne « Phase Locked Loop » synchronisée sur le réseau ; le courant absorbé sur une phase est alors purement sinusoïdal, quelle que soit l'allure de la tension d'entrée (présence d'harmoniques).

Avantageusement, les moyens de commande COM sont configurés pour limiter l'appel de courant pendant la phase de démarrage du convertisseur. Cette phase de démarrage est suivie de la phase de régime établi lors de laquelle les moyens de commande sont configurés de sorte à commander l'interrupteur d'entrée S de sorte que la tension de sortie soit sensiblement fixe et égale à la tension de consigne. Ainsi l'appel de courant est inférieur à l'appel de courant qui serait obtenu si le régime établi débutait dès le démarrage (la tension de sortie serait égale à la tension de consigne dès le démarrage).

A cet effet, les moyens d'établissement de commande comprennent, par exemple comme représenté sur la figure 6, un autre multiplieur 50 pour multiplier la consigne en courant initiale CONSIN avec un courant de limitation Ilim permettant de limiter la consigne en courant commune CONSC délivrée aux multiplieurs 10 des chaînes de commande des différentes phases. La sortie du multiplieur 50 est alors fournie aux multiplieurs 10. En variante, la chaîne commune est dépourvue du multiplieur 50 et la consigne en courant initiale CONSIN est fournie en entrée des multiplieurs 10.

Le courant de limitation Ilim en fonction du temps suit par exemple la courbe représentée sur la figure 6. Le courant est nul entre t= 0 et t= ta. Le courant est ensuite une fonction linéaire du temps entre ta et tb puis fixe à partir de tb. La consigne en courant commune est ainsi limitée entre t = 0 et tb ce qui permet de limiter le rapport cyclique d entre 0 et tb et ainsi limiter la tension de sortie du convertisseur et l'appel de courant.

En variante, le courant de consigne commun CONSC est égal à un courant maximal Imax entre ta et tb supérieur au courant de consigne commun CONSC de régime établi et puis un courant de consigne commun CONSC nul lorsque la tension de sortie atteint la tension de consigne ce qui permet d'obtenir un démarrage plus rapide et de limiter l'appel de courant.

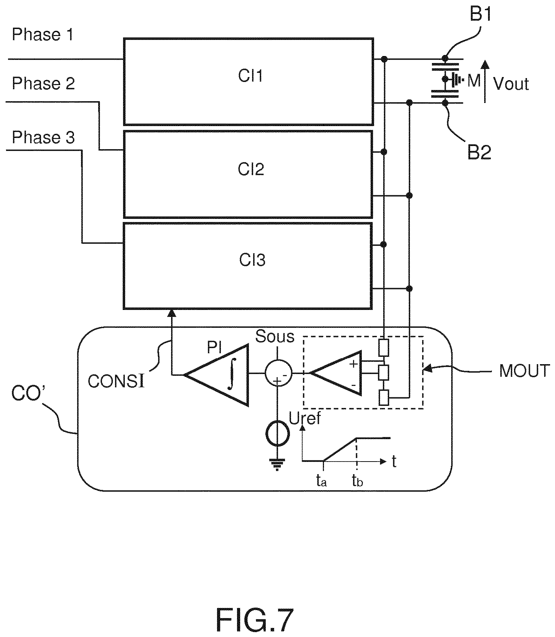

En variante, la tension de référence Uref (t) fournie en entrée du soustracteur SOUS suit une courbe temporelle permettant de réaliser une étape de démarrage comme décrite précédemment. La tension est par exemple du type représenté sur la figure 7. La tension de référence Uref est nulle de l'instant t=0 à l'instant t= ta, puis elle suit une fonction linéaire croissante du temps entre ta et tb correspondant à l'instant de la fin du démarrage. La tension de référence est ensuite constante à partir de tb. Les moyens de commande de la figure 7, différents de ceux de de la figure 6 par la chaîne de commande commune CO' dépourvue de multiplieur 50 et par tension de référence fournie en entrée du soustracteur SOUS.

Sur les figures 3 et 4, l'inductance d'entrée L est reliée directement à la borne d'entrée E du convertisseur, c'est-à-dire à une des phases de la ligne polyphasée ou à la ligne véhiculant la tension monophasée. En variante, l'inductance d'entrée est à la borne d'entrée du convertisseur, c'est-à-dire à une des phases de la ligne polyphasée ou à la ligne véhiculant la tension monophasée, par l'intermédiaire d'un filtre passe-bas de mode commun et/ou différentiel de la chaîne de conversion.

**Revendications**

1. Convertisseur AC-DC à découpage destiné à délivrer une tension de sortie $V_{out}$ continue entre une première borne de sortie (B1) et une deuxième borne de sortie (B2), ledit convertisseur comprend au moins une chaîne de conversion destinée à convertir une tension alternative d'entrée appliquée entre une borne d'entrée (E) et un point neutre (N), la chaîne de conversion comprenant :

   - une inductance d'entrée (L) comprenant une première borne de l'inductance d'entrée reliée à la borne d'entrée (E) et une deuxième borne de l'inductance d'entrée,
   - un interrupteur d'entrée (S) comprenant une première borne reliée à la deuxième borne de l'inductance d'entrée (L), l'interrupteur d'entrée (S) étant un interrupteur commandable bidirectionnel en tension et en courant,
   - un circuit LC comprenant une première borne reliée à la deuxième borne de l'inductance d'entrée (L) et une deuxième borne reliée à un point intermédiaire (PI), le circuit LC comprenant entre sa première borne et sa deuxième borne, une inductance de résonance ($L_C$) de valeur inférieure à celle de l'inductance d'entrée (L), et un condensateur de liaison (C) relié en série avec l'inductance de résonance ($L_C$),
   - un premier interrupteur de sortie D1 comprenant une première borne reliée à la première borne de sortie B1 et une deuxième borne reliée au point intermédiaire PI, laissant passer le courant uniquement du point intermédiaire PI vers la première borne de sortie B1,
   - un deuxième interrupteur de sortie D2 comprenant une première borne reliée à la deuxième borne de sortie B2 et une deuxième borne reliée au point intermédiaire PI, le deuxième interrupteur laissant passer le courant uniquement de la deuxième borne B2 vers le point intermédiaire,

   le convertisseur comprenant en outre :

- un premier condensateur de sortie ($C_1$) comprenant une borne reliée à la première borne de sortie (B1) et une autre borne reliée à une deuxième borne de l'interrupteur d'entrée (S),

ledit convertisseur étant **caractérisé en ce qu'**il comprend en outre : un deuxième condensateur de sortie ($C_2$) de même capacité que le premier condensateur de sortie ($C_1$) et de capacité supérieure à la capacité du condensateur de liaison (C), le deuxième condensateur de sortie ($C_2$) comprenant une borne reliée à la deuxième borne de sortie (B2) et une autre borne reliée à la deuxième borne de l'interrupteur d'entrée (S).

2. Convertisseur AC-DC selon la revendication précédente, le convertisseur étant destiné à transformer une tension polyphasée comprenant plusieurs phases en une tension continue, ledit convertisseur comprenant plusieurs chaînes de conversion identiques, chaque chaîne de conversion recevant une des phases sur sa borne d'entrée.

3. Convertisseur AC-DC selon la revendication précédente, dans lequel la deuxième borne de l'interrupteur d'entrée n'est pas reliée au point neutre.

4. Convertisseur AC-DC selon l'une quelconque des revendications précédentes, comprenant des moyens de commande (COM) configurés pour commander l'interrupteur d'entrée (S) de sorte que la chaîne de conversion fonctionne en abaisseur pendant une phase de démarrage du convertisseur.

5. Convertisseur AC-DC selon l'une quelconque des revendications précédentes, comprenant des moyens de commandes configurés pour commander l'interrupteur d'entrée (S) de sorte que, pendant une phase de démarrage du convertisseur, la tension de sortie Vout est une fonction monotone croissante du temps et rejoint une tension de consigne en passant par une tension de sortie intermédiaire non nulle et inférieure à la tension de consigne puis pour commander le convertisseur, pendant une phase de régime établi, débutant lorsque la tension de sortie atteint la tension de consigne, de sorte à maintenir la tension de sortie sensiblement fixe à la tension de consigne pendant une durée non nulle.

6. Convertisseur AC-DC selon la revendication précédente, dans lequel les moyens de commande sont configurés pour que la phase de démarrage du convertisseur comprenne une phase d'augmentation de la tension de sortie $V_{out}$ du convertisseur avec une dérivée continue d'une tension initiale à la tension de consigne.

7. Convertisseur AC-DC selon l'une quelconque des revendications précédentes, dans lequel l'inductance d'entrée est reliée à la borne d'entrée par l'intermédiaire d'un filtre passe-bas.

8. Convertisseur AC-DC selon l'une quelconque des revendications précédentes, dans lequel l'inductance de résonance présente un circuit magnétique de fréquence de coupure inférieure à 10 MHz.

9. Convertisseur AC-DC selon l'une quelconque des revendications précédentes, dans lequel les condensateurs de sortie présentent une capacité au moins cent fois plus élevée que la capacité du condensateur de liaison et l'inductance d'entrée présente une valeur d'inductance au moins mille fois plus élevée que la valeur d'inductance de l'inductance de résonance.

10. Procédé de commande d'un convertisseur AC-DC selon l'une quelconque des revendications précédentes, **caractérisée en ce qu'**il comprend une phase de démarrage du convertisseur selon l'une ou l'autre des deux dispositions i et ii suivantes :

   i/ lors de ladite phase, l'interrupteur d'entrée (S) est commandé de sorte que la chaîne de conversion fonctionne en abaisseur ;
   ii/ ladite phase débute au démarrage du convertisseur, et pendant ladite phase, on commande l'interrupteur d'entrée (S) de sorte que la tension de sortie $V_{out}$ est une fonction monotone croissante du temps et rejoint une tension de consigne en passant par une tension de sortie intermédiaire non nulle et inférieure à la tension de consigne, le procédé comprenant une phase de régime établi, débutant lorsque la tension de sortie atteint la tension de consigne, pendant laquelle on commande l'interrupteur de sorte à maintenir la tension de sortie sensiblement fixe à la tension de consigne pendant une durée non nulle.

11. Procédé de commande d'un convertisseur AC-DC selon la revendication précédente, dans lequel la phase ii de démarrage comprend une phase d'augmentation de la tension de sortie Vout du convertisseur avec une dérivée continue d'une tension initiale à la tension de consigne.

**12.** Procédé de commande selon l'une quelconque des revendications 10 et 11, dans lequel la chaîne de conversion fonctionne en élévateur lors d'une phase de régime établi ultérieure à la phase ii de démarrage.

**Patentansprüche**

**1.** Schalt-AC-DC-Wandler zur Abgabe einer Ausgangsgleichspannung $V_{out}$ zwischen einer ersten Ausgangsklemme (B1) und einer zweiten Ausgangsklemme (B2), wobei der Wandler mindestens eine Umwandlungskette zum Umwandeln einer zwischen einer Eingangsklemme (E) und einem Nullpunkt (N) angelegten Eingangswechselspannung umfasst, wobei die Umwandlungskette Folgendes umfasst:

- eine Eingangsinduktivität (L), umfassend eine erste Klemme der Eingangsinduktivität, die mit der Eingangsklemme (E) verbunden ist, und eine zweite Klemme der Eingangsinduktivität,
- einen Eingangsschalter (S), umfassend eine erste Klemme, die mit der zweiten Klemme der Eingangsinduktivität (L) verbunden ist, wobei der Eingangsschalter (S) ein bidirektional ansteuerbarer Spannungs- und Stromschalter ist,
- eine LC-Schaltung, umfassend eine erste Klemme, die mit der zweiten Klemme der Eingangsinduktivität (L) verbunden ist, und eine zweite Klemme, die mit einem Zwischenpunkt (PI) verbunden ist, wobei die LC-Schaltung zwischen ihrer ersten Klemme und ihrer zweiten Klemme eine Resonanzinduktivität ($L_C$), deren Wert denjenigen der Eingangsinduktivität (L) unterschreitet, und einen mit der Resonanzinduktivität ($L_C$) in Reihe geschalteten Verbindungskondensator (C) umfasst,
- einen ersten Ausgangsschalter D1, umfassend eine erste Klemme, die mit der ersten Ausgangsklemme B1 verbunden ist, und eine zweite Klemme, die mit dem Zwischenpunkt PI verbunden ist und nur den Strom von dem Zwischenpunkt PI zu der ersten Ausgangsklemme B1 durchlässt,
- einen zweiten Ausgangsschalter D2, umfassend eine erste Klemme, die mit der zweiten Ausgangsklemme B2 verbunden ist, und eine zweite Klemme, die mit dem Zwischenpunkt PI verbunden ist, wobei der zweite Schalter den Strom nur von der zweiten Klemme B2 zum Zwischenpunkt PI durchlässt, wobei der Wandler ferner Folgendes umfasst:
- einen ersten Ausgangskondensator ($C_1$), umfassend eine Klemme, die mit der ersten Ausgangsklemme (B1) verbunden ist, und eine weitere Klemme, die mit einer zweiten Klemme des Eingangsschalters (S) verbunden ist,

wobei der Wandler **dadurch gekennzeichnet ist, dass** er ferner Folgendes umfasst: einen zweiten Ausgangskondensator ($C_2$) mit gleicher Kapazität wie der erste Ausgangskondensator ($C_1$) und mit einer Kapazität größer als die Kapazität des Verbindungskondensators (C), wobei der zweite Ausgangskondensator ($C_2$) eine Klemme umfasst, die mit der zweiten Ausgangsklemme (B2) verbunden ist, und eine weitere Klemme, die mit der zweiten Klemme des Eingangsschalters (S) verbunden ist.

**2.** AC-DC-Wandler nach dem vorhergehenden Anspruch, wobei der Wandler dazu bestimmt ist, eine mehrphasige Spannung, welche mehrere Phasen umfasst, in eine Gleichspannung umzuwandeln, wobei der Wandler mehrere identische Umwandlungsketten umfasst, wobei jede Umwandlungskette eine der Phasen an ihrer Eingangsklemme aufnimmt.

**3.** AC-DC-Wandler nach dem vorhergehenden Anspruch, wobei die zweite Klemme des Eingangsschalters nicht mit dem Nullpunkt verbunden ist.

**4.** AC-DC-Wandler nach einem der vorhergehenden Ansprüche, umfassend Steuerungsmittel (COM), die so konfiguriert sind, dass sie den Eingangsschalter (S) so steuern, dass die Umwandlungskette während einer Anlaufphase des Wandlers als Abwärtswandler arbeitet.

**5.** AC-DC-Wandler nach einem der vorhergehenden Ansprüche, umfassend Steuerungsmittel, die konfiguriert sind, um den Eingangsschalter (S) so zu steuern, dass während einer Anlaufphase des Wandlers die Ausgangsspannung $V_{out}$ eine monoton ansteigende Funktion der Zeit ist und eine Sollspannung über eine Zwischenausgangsspannung ungleich null erreicht, die unter der Sollspannung liegt, und um anschließend den Wandler während einer stationären Phase, welche beginnt, wenn die Ausgangsspannung die Sollspannung erreicht, so zu steuern, dass er die Ausgangsspannung im Wesentlichen fix auf der Sollspannung während einer Dauer ungleich null hält.

**6.** AC-DC-Wandler nach dem vorhergehenden Anspruch, wobei die Steuermittel so konfiguriert sind, dass die Anlaufphase des Wandlers eine Phase der Erhöhung der Ausgangsspannung $V_{out}$ des Wandlers mit einer kontinuierlichen Ableitung von einer Anfangsspannung auf die Sollspannung umfasst.

7. AC-DC-Wandler nach einem der vorhergehenden Ansprüche, wobei die Eingangsinduktivität über einen Tiefpassfilter mit der Eingangsklemme verbunden ist.

8. AC-DC-Wandler nach einem der vorhergehenden Ansprüche, wobei die Resonanzinduktivität einen Magnetkreis mit einer Abschaltfrequenz von unter 10 MHz aufweist.

9. AC-DC-Wandler nach einem der vorhergehenden Ansprüche, wobei die Ausgangskondensatoren eine mindestens hundertmal höhere Kapazität als die Kapazität des Verbindungskondensators aufweisen und die Eingangsinduktivität einen mindestens tausendmal höheren Induktivitätswert als den Induktivitätswert der Resonanzinduktivität aufweist.

10. Verfahren zur Steuerung eines AC-DC-Wandlers nach einem der vorhergehenden Ansprüche, **dadurch gekennzeichnet, dass** es eine Anlaufphase des Wandlers nach einer der beiden folgenden Anordnungen i und ii umfasst:

i/ in dieser Phase wird der Eingangsschalter (S) so gesteuert, dass die Umwandlungskette als Abwärtswandler arbeitet;
ii/ diese Phase beginnt beim Anlauf des Wandlers, und während dieser Phase wird der Eingangsschalter (S) so gesteuert, dass die Ausgangsspannung $V_{out}$ eine monoton ansteigende Funktion der Zeit ist und über eine Zwischenausgangsspannung ungleich null, die unter der Sollspannung liegt, eine Sollwertspannung erreicht, wobei das Verfahren eine stationäre Phase umfasst, welche beginnt, wenn die Ausgangsspannung die Sollspannung erreicht, während welcher der Schalter so gesteuert wird, dass er die Ausgangsspannung im Wesentlichen fix auf der Sollspannung während einer Dauer ungleich null hält.

11. Verfahren zum Steuern eines AC-DC-Wandlers nach dem vorhergehenden Anspruch, wobei die Anlaufphase ii eine Phase des Erhöhens der Ausgangsspannung $V_{out}$ des Wandlers mit einer kontinuierlichen Ableitung einer Anfangsspannung auf die Sollspannung umfasst.

12. Steuerungsverfahren nach einem der Ansprüche 10 und 11, wobei die Umwandlungskette nach der Anlaufphase ii als Aufwärtswandler in einer stationären Phase arbeitet.

**Claims**

1. A chopping AC-DC converter intended to supply a DC output voltage $V_{out}$ between a first output terminal (B1) and a second output terminal (B2), said converter comprising at least one conversion chain intended to convert an input AC voltage applied between an input terminal (E) and a neutral point (N), the conversion chain comprising:

- an input inductor (L) comprising a first terminal of the input inductor connected to the input terminal (E) and a second terminal of the input inductor;
- an input switch (S) comprising a first terminal connected to the second terminal of the input inductor (L), the input switch (S) being a two-way voltage and current controllable switch;
- an LC circuit comprising a first terminal connected to the second terminal of the input inductor (L) and a second terminal connected to an intermediate point (PI), the LC circuit comprising, between its first terminal and its second terminal, a resonance inductor ($L_C$) with a value below that of the input inductor (L), and a link capacitor (C) connected in series with the resonance inductor ($L_C$);
- a first output switch D1 comprising a first terminal connected to the first output terminal B1 and a second terminal connected to the intermediate point PI, allowing through the current only from the intermediate point PI to the first output terminal B1;
- a second output switch D2 comprising a first terminal connected to the second output terminal B2 and a second terminal connected to the intermediate point PI, the second switch allowing through the current only from the second terminal B2 to the intermediate point, the converter further comprising:
- a first output capacitor ($C_1$) comprising a terminal connected to the first output terminal (B1) and another terminal connected to a second terminal of the input switch (S);

said converter being **characterised in that** it further comprises: a second output capacitor ($C_2$) with the same capacitance as the first output capacitor ($C_1$) and having a capacitance that is greater than the capacitance of the link capacitor (C), the second output capacitor ($C_2$) comprising a terminal connected to the second output terminal (B2) and another terminal connected to the second terminal of the input switch (S).

2. The AC-DC converter according to the preceding claim, the converter being intended to convert a polyphase voltage comprising several phases into a DC voltage, said converter comprising several identical conversion chains, with each conversion chain receiving one of the phases on its input terminal.

3. The AC-DC converter according to the preceding claim, wherein the second terminal of the input switch is not connected to the neutral point.

4. The AC-DC converter according to any one of the preceding claims, comprising control means (COM) configured to control the input switch (S) so that the conversion chain operates in step-down mode during a start-up phase of the converter.

5. The AC-DC converter according to any one of the preceding claims, comprising control means configured to control the input switch (S) so that, during a start-up phase of the converter, the output voltage $V_{out}$ is an increasing monotone function of time and joins a setpoint voltage by passing through an intermediate output voltage that is non-zero and is lower than the setpoint voltage, and then to control the converter during a steady state phase starting when the output voltage reaches the setpoint voltage, so as to keep the output voltage substantially set to the setpoint voltage for a non-zero duration.

6. The AC-DC converter according to the preceding claim, wherein the control means are configured so that the start-up phase of the converter comprises a phase of increasing the output voltage $V_{out}$ of the converter with a continuous drift of an initial voltage at the setpoint voltage.

7. The AC-DC converter according to any one of the preceding claims, wherein the input inductor is connected to the input terminal by means of a low-pass filter.

8. The AC-DC converter according to any one of the preceding claims, wherein the resonance inductor has a magnetic circuit with a cut-off frequency of less than 10 MHz.

9. The AC-DC converter according to any one of the preceding claims, wherein the output capacitors have a capacitance that is at least one hundred times higher than the capacitance of the link capacitor and the input inductor has an inductance value that is at least one thousand times higher than the inductance value of the resonance inductor.

10. A method for controlling an AC-DC converter according to any one of the preceding claims, **characterised in that** it comprises a phase of starting-up the converter according to either one of the following two arrangements i and ii:

> i/ during said phase the input switch (S) is controlled so that the conversion chain operates in step-down mode;
> ii/ said phase starts upon start-up of the converter, and during said phase the input switch (S) is controlled so that the output voltage $V_{out}$ is an increasing monotone function of time and joins a setpoint voltage by passing through an intermediate output voltage that is non-zero and is lower than the setpoint voltage, the method comprising a steady state phase, starting when the output voltage reaches the setpoint voltage and during which the switch is controlled so as to keep the output voltage substantially set to the setpoint voltage for a non-zero duration.

11. The method for controlling an AC-DC converter according to the preceding claim, wherein the start-up phase ii comprises a phase of increasing the output voltage $V_{out}$ of the converter with a continuous drift of an initial voltage at the setpoint voltage.

12. The control method according to any one of claims 10 and 11, wherein the conversion chain operates in step-up mode during a steady state phase after the start-up phase ii.

FIG.1 (ART ANTERIEUR)

FIG.2

FIG.3

FIG.4

FIG.5a

FIG.5b

FIG.6

FIG.7

## RÉFÉRENCES CITÉES DANS LA DESCRIPTION

### Documents brevets cités dans la description

- US 20100259240 A

- CN 101860192 A

### Littérature non-brevet citée dans la description

- **CHONGMING QIAO et al.** Three-phase unity-power-factor Vienna rectifier with unified constant-frequency intégration control. *Power Electronics Congress*

- **MR.ABHIJIT D. PATHAK.** *3-Phase Power Factor Correction, Using Vienna Rectifier Approach and Modular Construction for Improved Overall Performance, Efficiency and Reliability*